# EUROPEAN PATENT SPECIFICATION

(11) **EP 3 000 690 B1**
(45) Date of publication and mention of the grant of the patent: **06.03.2019**
(21) Application number: 14853348.2
(22) Date of filing: 24.09.2014
(51) Int. Cl.: B62D 1/184, B62D 1/189

(54) **POSITION ADJUSTING-TYPE STEERING DEVICE**
LENKVORRICHTUNG MIT POSITIONSANPASSUNG
DISPOSITIF DE DIRECTION DU TYPE À POSITION RÉGLABLE

(30) Priority: 16.10.2013 JP 2013215599
(43) Date of publication of application: 30.03.2016
(73) Proprietor: NSK Ltd., Tokyo 141-8560 (JP)
(72) Inventor: TERASAWA Daisuke, Maebashi-shi Gunma 371-8527 (JP); WATANABE Masajirou, Maebashi-shi Gunma 371-8527 (JP)
(74) Representative: Mewburn Ellis LLP
(86) International application number: PCT/JP2014/075217
(87) International publication number: WO 2015/056538

(56) References cited:
- EP-A1- 2 617 625
- WO-A1-2008/056711
- WO-A1-2012/035891
- WO-A1-2012/132505
- JP-A- H09 272 446
- JP-A- 2005 199 733
- JP-A- 2006 051 876
- JP-A- 2008 137 393
- JP-A- 2012 201 274
- US-A1- 2004 007 863

## Description

### TECHNICAL FIELD

The present invention relates to improvements on a position adjustable steering apparatus having a function of adjusting at least one of a front-rear position and an upper-lower position of a steering wheel in accordance with a physique or driving posture of a driver.

### BACKGROUND ART

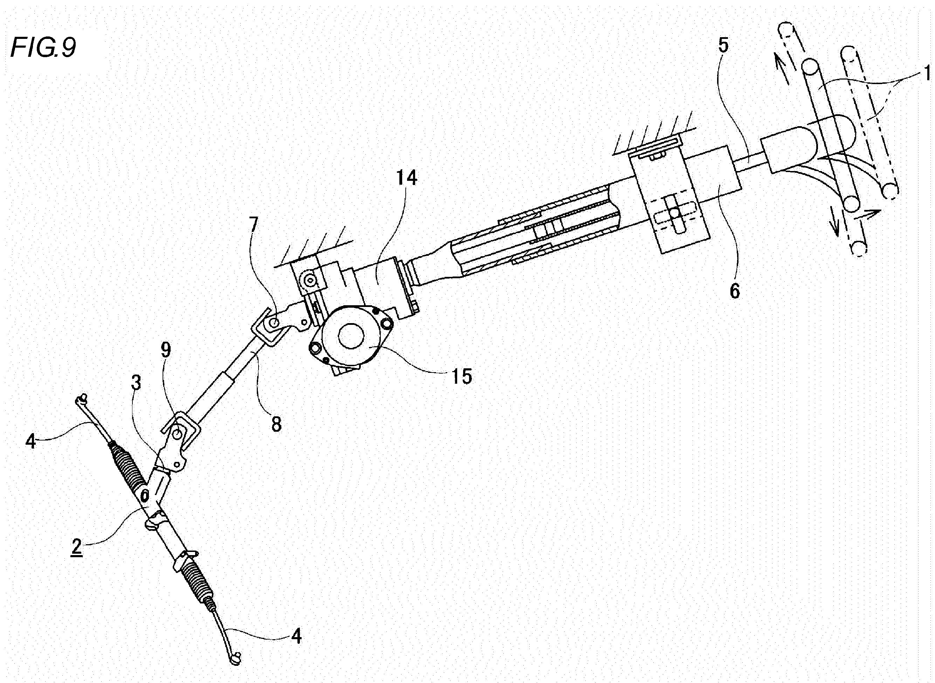

As shown in FIG. 9, a vehicle steering apparatus is configured to transmit rotation of a steering wheel 1 to an input shaft 3 of a steering gear unit 2, and to push or pull a pair of left and right tie rods 4, 4 according to rotation of the input shaft 3, thereby applying a steering angle to front wheels. The steering wheel 1 is supported and fixed to a rear end portion of a steering shaft 5, and the steering shaft 5 is axially inserted into a cylindrical steering column 6 to be rotatably supported by the steering column 6. A front end portion of the steering shaft 5 is connected to a rear end portion of an intermediate shaft 8 via a universal joint 7, and a front end portion of the intermediate shaft 8 is connected to the input shaft 3 via another universal joint 9.

Incidentally, in the specification and the claims, a front-rear direction, a left-right direction (width direction) and an upper-lower direction indicate a front-rear direction, a left-right direction (width direction) and an upper-lower direction of a vehicle, unless otherwise mentioned.

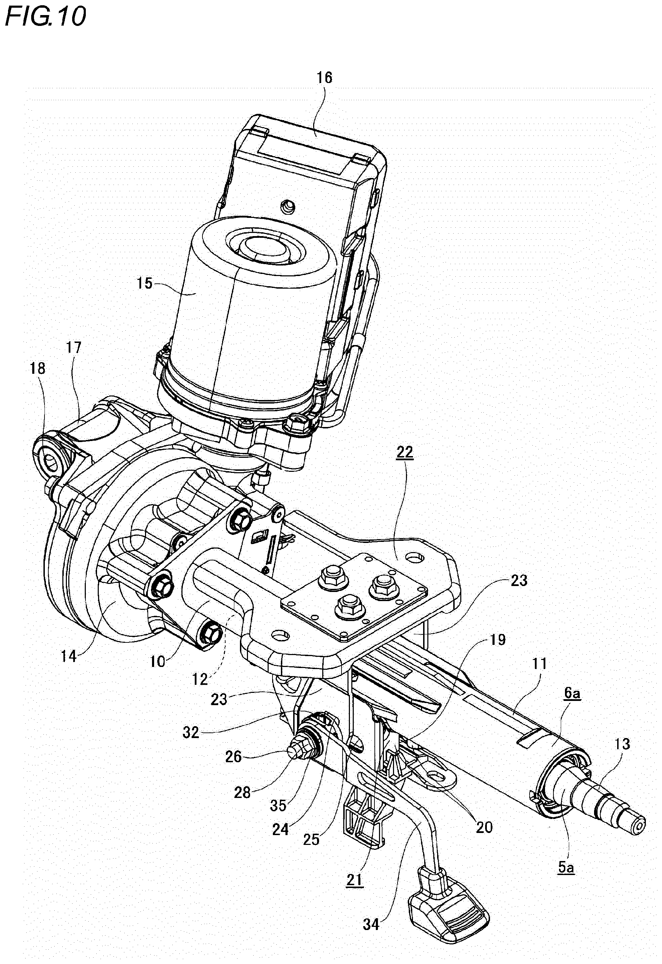

In the above-described steering apparatus, a position adjustable steering apparatus has been widely used which includes a tilt mechanism for adjusting an upper-lower position of the steering wheel 1 or a telescopic mechanism for adjusting a front-rear position thereof in accordance with a physique or driving posture of a driver. FIGS. 10 to 12B illustrate an example of the conventional position adjustable steering apparatus, which is shown in Patent Document 1, for example.

According to the conventional structure, in order to configure the telescopic mechanism, in a steering column 6a, a front part of an outer column 11 is fitted onto a rear part of an inner column 10 to be axially relatively displaced. Also, in a steering shaft 5a, a rear part of an inner shaft 12 and a front part of an outer shaft 13 are fitted to be torque-transmittable and to be axially relatively displaced by spline engagement and the like. The steering wheel 1 (refer to FIG. 9) is supported and fixed to a rear end portion of the outer shaft 13 protruding from a rear end opening of the outer column 11.

A housing 14 for accommodating therein a decelerator and the like configuring an electronic power steering apparatus is coupled and fixed to a front end portion of the inner column 10. An electric motor 15, which is an auxiliary power source of the electric power steering apparatus, and a controller 16 for controlling energization to the electric motor 15 are supported and fixed to an upper surface of the housing 14.

In order to configure the tilt mechanism, the housing 14 is supported to a vehicle body to be pivotally displaced about a horizontal shaft. Therefore, an upper front end of the housing 14 is provided with a support cylinder 17 extending in the left-right direction. A front end portion of the steering column 6a is supported to the vehicle body by the horizontal shaft such as a bolt, which can be inserted into a center hole 18 of the support cylinder 17 such that the steering column 6a can be pivotally displaced in a direction of moving up and down the rear part of the steering column 6a.

A lower part of the front part of the outer column 11 is provided with a slit 19, which is axially long, and an inner diameter of the front part is thus made to be elastically expanded and contracted. A pair of left and right sandwiched plate parts 20, 20 is provided with the slit 19 being interposed therebetween from both left and right sides, and a displacement bracket 21 is configured by both the sandwiched plate parts 20, 20. Both the sandwiched plate parts 20, 20 are supported to a support bracket 22 supported to the vehicle body such that upper-lower and front-rear positions thereof can be displaced.

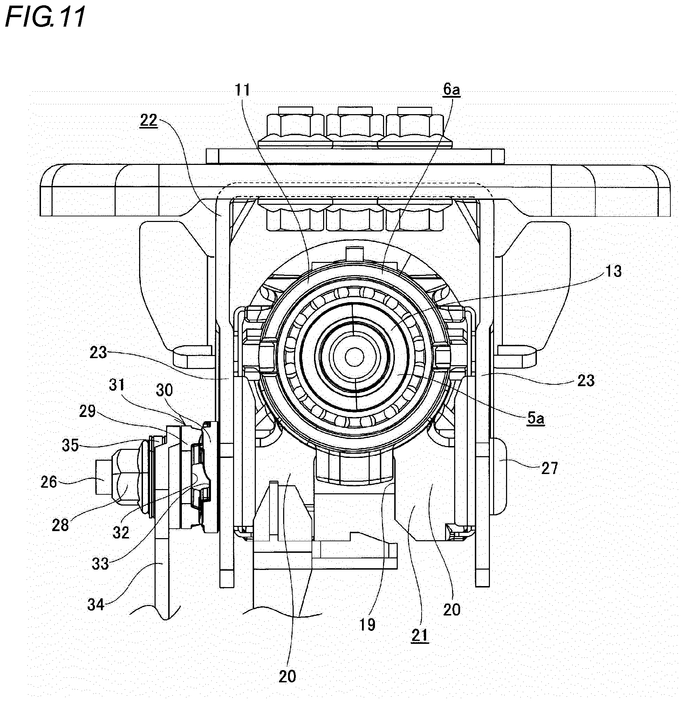

At a state where the steering wheel 1 is kept at an adjusted position, both the sandwiched plate parts 20, 20 are strongly sandwiched by a pair of left and right support plate parts 23, 23 configuring the support bracket 22. One support plate part 23 (left side in FIG. 11) and the other support plate part 23 (right side in FIG. 11) are formed with arc-shaped tilt adjustment long holes 24 which have a center in a horizontal axis and which are referred to as vehicle body side through holes. Both the sandwiched plate parts 20, 20 are formed with telescopic adjustment long holes 25 which are long in an axial direction of the outer column 11 and which are referred to as column side through holes.

An adjustment rod 26 is inserted into the respective long holes 24, 25. An anchor part 27 fixed to a base end portion (a right end portion in FIG. 11) of the adjustment rod 26 is engaged with the tilt adjustment long hole 24 formed at the other support plate part 23 so as to be only displaced along the tilt adjustment long hole 24 (rotation thereof is inhibited). On the other hand, a cam mechanism 31 having a driving cam 29 and a driven cam 30 is provided between a nut 28 screwed to a tip portion (a left end portion in FIG. 11) of the adjustment rod 26 and an outer surface of the one support plate part 23.

Both the driving cam 29 and the driven cam 30 are made of a metal such as a sintered metal, and have a round wheel shape as a whole and are formed with center holes for inserting therein the adjustment rod 26, respectively. Facing side surfaces of both the driving cam 29 and the driven cam 30 are configured as a driving cam surface 32 and a driven cam surface 33, each of which has an uneven shape in a circumferential direction. The driven cam 30 is engaged with the tilt adjustment long hole 24 formed at the one support plate part 23 so as to be only displaced along the tilt adjustment long hole 24. The driving cam 29 is coupled and fixed to a base end portion of an adjustment lever 34 provided for the tip portion of the adjustment rod 26, so as to be rotated around the adjustment rod 26 as the adjustment lever 34 is rotated. In the meantime, a thrust bearing 35 is provided between the nut 28 screwed to the tip portion of the adjustment rod 26 and the base end portion of the adjustment lever 34 such that the driving cam 29 is rotatable, while supporting a thrust load applied to the driving cam 29.

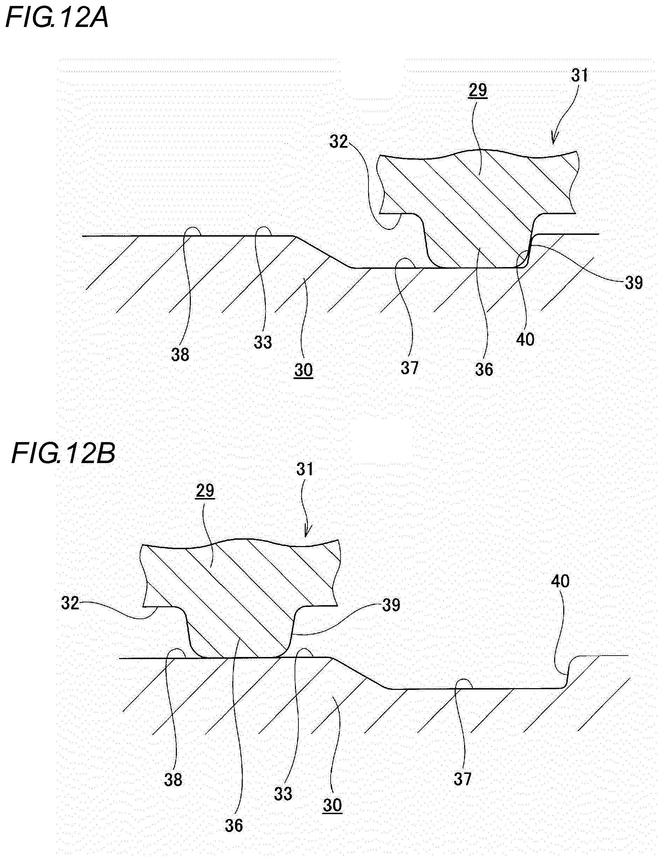

When adjusting a position of the steering wheel 1, the adjustment lever 34 is rotated in a predetermined direction (normally, a downward direction), so that a convex portion 36 provided on the driving cam surface 32 and a concave part 37 provided on the driven cam surface 33 are engaged to contract an axial dimension of the cam mechanism 31, as shown in FIG. 12A. An interval between the driven cam 30 and the anchor part 27 is widened to widen an interval between both the support plate parts 23, 23. As a result, surface pressures of contact parts between inner surfaces of both the support plate parts 23, 23 and outer surfaces of both the sandwiched plate parts 20, 20 are lowered or lost, the inner diameter of the front end portion of the outer column 11 is elastically expanded, and a surface pressure of a contact part between an inner peripheral surface of the front end portion of the outer column 11 and an outer peripheral surface of the rear end portion of the inner column 10 is lowered. At this state, it is possible to adjust the front-rear position and upper-lower position of the steering wheel 1 within a range in which the adjustment rod 26 can be displaced in the tilt adjustment long hole 24 and the telescopic adjustment long hole 25.

After moving the steering wheel 1 to a desired position, the adjustment lever 34 is rotated in an opposite direction (an upward direction) to the predetermined direction, so that the convex portion 36 of the driving cam surface 32 and a convex portion 38 provided on the driven cam surface 33 are engaged to widen the axial dimension of the cam mechanism 31, as shown in FIG. 12B. Thus, the interval between the driven cam 30 and the anchor part 27 is narrowed to narrow the interval between both the support plate parts 23, 23. As a result, the surface pressures of the contact parts between the inner surfaces of both the support plate parts 23, 23 and the outer surfaces of both the sandwiched plate parts 20, 20 are increased, the inner diameter of the front end portion of the outer column 11 is elastically contracted, and the surface pressure of the contact part between the inner peripheral surface of the front end portion of the outer column 11 and the outer peripheral surface of the rear end portion of the inner column 10 is increased to hold the steering wheel 1 at an adjusted position.

According to the above-described position adjustable steering apparatus, a step portion 39, which is a stopper part, is provided at one circumferential side (a right side, in FIGS. 12A and 12B) of the convex portion 36 of the driving cam surface 32, and a step portion 40, which is a stopper part, is provided at one circumferential side of the concave part 37 of the driven cam surface 33. The rotation of the adjustment lever 34 in the predetermined direction is regulated based on the contact between both the step portions 39, 40, as shown in FIG. 12A.

In this position adjustable steering apparatus, when the adjustment lever 34 is rotated (the lock is released) in the predetermined direction so as to adjust a position of the steering wheel 1, the step portions 39, 40 strongly contact each other (collision) to generate a harsh abnormal noise (metal contact noise).

Incidentally, Patent Documents 2 and 3 are other technical documents relating to the present invention. Patent Documents 2 and 3 disclose a structure in which a multidisc type friction engagement mechanism is employed for a position adjustable steering apparatus to improve a force for holding a steering wheel at an adjusted position.

EP-A-2617625 is considered the closest prior art document, and discloses a steering device allowing for tilt adjustment of the position of a steering wheel, which possesses all of the features of the preamble of claim 1.

### BACKGROUND ART DOCUMENT

### PATENT DOCUMENT

Patent Document 1: JP-A-2013-047088
Patent Document 2: JP-A-2005-343331
Patent Document 3: JP-A-2008-114837

### SUMMARY OF THE INVENTION

### PROBLEMS TO BE SOLVED

The present invention has been made in view of the above circumstances. It is an object of the present invention to realize a structure of a position adjustable steering apparatus capable of suppressing generation of a harsh abnormal noise which is caused as stopper parts provided on both cam surfaces contact each other when rotating an adjustment lever in a predetermined direction (a direction in which an axial dimension of a cam mechanism is contracted) so as to adjust a position of a steering wheel.

### MEANS FOR SOLVING THE PROBLEM

The present invention provides a position adjustable steering apparatus as set out in claim 1.

It is preferable that a contact surface of the buffer member which the other of a tip portion of the sub-arm and the part of the receiving side member contacts is formed with a plurality of projections extending in a direction perpendicular to an axial direction of the cam mechanism and arranged in the axial direction of the cam mechanism.

It is preferable that the receiving side member is fixed to the one support plate part such that when the adjustment lever is rotated by its own weight in the direction in which the axial dimension of the cam mechanism is contracted, the other of a tip portion of the sub-arm and the part of the receiving side member contacts the buffer member.

It is preferable that an outer surface of the receiving side member facing a tip portion of the sub-arm is provided with an engaging recess part and an inclined surface part, the engaging recess part being formed at a portion which faces the tip portion of the sub-arm and is an end portion at one side of a rotating direction of the sub-arm, in which the axial dimension of the cam mechanism is expanded, the inclined surface part being formed at a portion adjacent to the engaging recess part at the other side of the rotating direction of the sub-arm and being inclined in a direction in which a height in the width direction becomes lower as proceeding towards the other side of the rotating direction. The tip portion of the sub-arm contacts or engages the inclined surface part and the engaging recess part in a state where a pre-pressure based on elastic deformation of the sub-arm is applied.

It is preferable that a facing surface of the tip portion of the sub-arm, which faces the outer surface of the receiving side member, is formed with an inclined surface which has an angle greater than an inclined angle of the inclined surface part at a portion at the one side of the rotating direction of the sub-arm.

It is preferable that the outer surface of the receiving side member is provided with a flat part at an opposite side to the engaging recess part with respect to the inclined surface part, a facing surface of the tip portion of the sub-arm which faces the outer surface of the receiving side member is formed with a planar surface parallel with the flat part, and the flat part of the receiving side member is formed to be long such that the planar surface of the tip portion of the sub-arm is spaced from the inclined surface part of the receiving side member at a state where the other of the tip portion of the sub-arm and the part of the receiving side member contacts the buffer member.

It is preferable that the tip portion of the sub-arm contacts or engages the outer surface of the receiving side member including the inclined surface part and the engaging recess part always in a state where the pre-pressure based on the elastic deformation of the sub-arm is applied.

### EFFECTS OF THE INVENTION

According to the above-described position adjustable steering apparatus of the present invention, when the adjustment lever is rotated in the predetermined direction so as to adjust a position of the steering wheel, either one of the sub-arm and the receiving side member contacts the buffer member. Therefore, it is possible to prevent the stopper parts provided on cam surfaces of the driving cam and driven cam from contacting each other. Therefore, it is possible to suppress the generation of the harsh noise (metal contact noise), which would be caused by the contact.

### BRIEF DESCRIPTION OF THE DRAWINGS

FIG. 1 is a side view illustrating a first embodiment of the present invention.
FIG. 2 is a partially exploded perspective view, as seen from rear.
FIG. 3 is an enlarged sectional view taken along a line a-a of FIG. 1.
FIG. 4A is a side view illustrating a state where an adjustment lever, a sub-arm, a receiving side member and a buffer member are taken out and the adjustment lever is rotated to an upper end position, and FIG. 4B is a side view illustrating a state where the adjustment lever is rotated to a lower end position.
FIG. 5A is a perspective view as seen from below, which illustrates the state where the adjustment lever, the sub-arm, the receiving-side member and the buffer member are taken out and the adjustment lever is rotated to the upper end position, and FIG. 5B is a perspective view as seen from below, which illustrates the state where the adjustment lever is rotated to the lower end position.
FIG. 6A is a view as seen from below, which illustrates a state where the sub-arm, the receiving side member and the buffer member are taken out and the adjustment lever is rotated to the upper end position, FIG. 6B is a view as seen from below, which illustrates the state where the adjustment lever is rotated to the lower end position, and FIG. 6C is an enlarged view of a VI part of FIG. 6B.
FIG. 7 is a view showing a relation between a rotating angle of a cam mechanism and a rotating angle of the sub-arm.
FIG. 8 is the same view as FIG. 6B, which illustrates a second embodiment of the present invention.
FIG. 9 is a partially cut side view illustrating an example of a known steering apparatus.
FIG. 10 is a perspective view as seen from a rear-upper side, which illustrates an example of the conventional structure of a position adjustable steering apparatus.
FIG. 11 is an end view as seen from rear, which illustrates an example of the conventional structure of the position adjustable steering apparatus in which a part is omitted.
FIGS. 12A and 12B are schematic views for explaining operations of a cam mechanism.

### DETAILED DESCRIPTION OF EMBODIMENTS

### [First Embodiment]

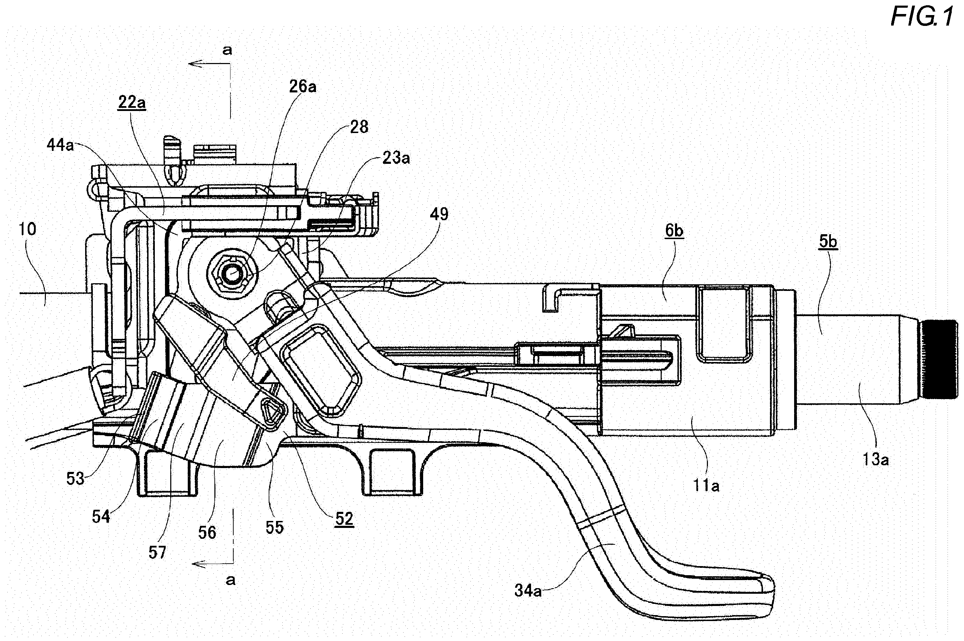

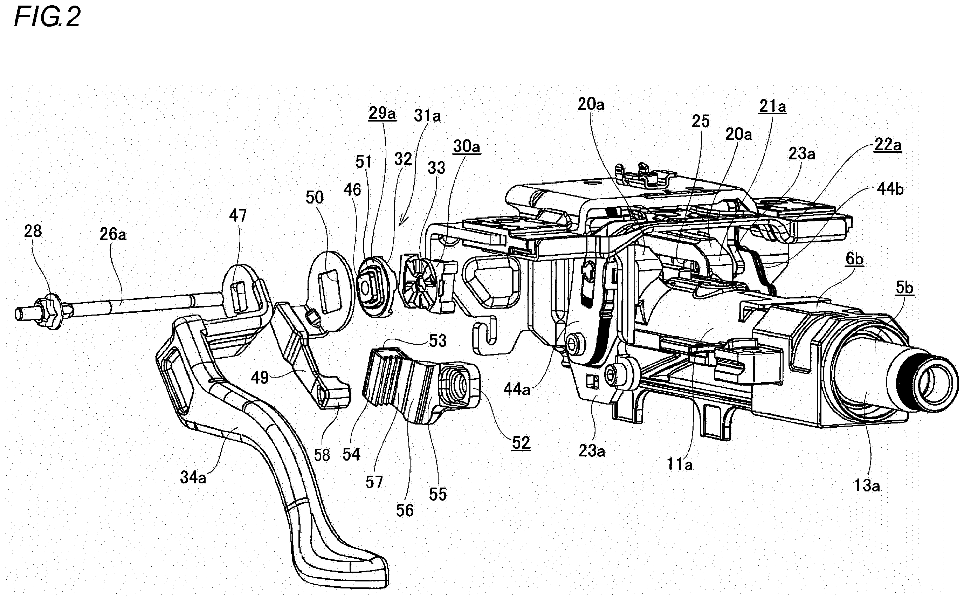

FIGS. 1 to 7 illustrate a first embodiment of the present invention. The characteristic features of this embodiment are to employ an abnormal noise suppressing structure (a structure including a sub-arm 49, a receiving side member 52 and a buffer member 54) for suppressing generation of a harsh abnormal noise (metal contact noise), which is caused as the step portions 39, 40 (refer to FIG. 12) of both driving and driven cam surfaces 32, 33 strongly contact each other (collision) when an adjustment lever 34a is rotated in a downward direction (a direction in which an axial dimension of a cam mechanism 31a is contracted). Since the other structures and operations are basically the same as the conventional structure shown in FIGS. 10 to 12, except for some parts, the overlapping illustrations and descriptions are omitted or simplified. In the below, the characteristic features of this embodiment and the different parts from the conventional structure will be described.

In a structure of this embodiment, a pair of sandwiched plate parts 20a, 20a configuring a displacement bracket 21a is provided with being spaced in a width direction via a slit 19a on an upper surface of an outer column 11a configuring a steering column 6b. An adjustment rod 26a is inserted into telescopic adjustment long holes 25, 25 formed at corresponding positions of both the sandwiched plate parts 20a, 20a and tilt adjustment long holes 24, 24 formed at a pair of left and right support plate parts 23a, 23a configuring a support bracket 22a. An interval between an anchor part 27a fixed to a base end portion of the adjustment rod 26a and a driven cam 30a of a cam mechanism 31a is expanded and contracted based on an operation of the adjustment lever 34a provided at a tip portion of the adjustment rod 26a, so that an upper-lower position and a front-rear position of the steering wheel 1 (refer to FIG. 9) supported and fixed to a rear end portion of an outer shaft 13a configuring a steering shaft 5b can be adjusted. Incidentally, in this embodiment, a state where the adjustment lever 34a is rotated upwards (the axial dimension of the cam mechanism 31a is increased) is a locked state where a holding force for holding the steering wheel 1 at an adjusted position is applied, and a state where the adjustment lever 34a is rotated downwards (the axial dimension of the cam mechanism 31a is contracted) is an unlocked state where the holding force is released.

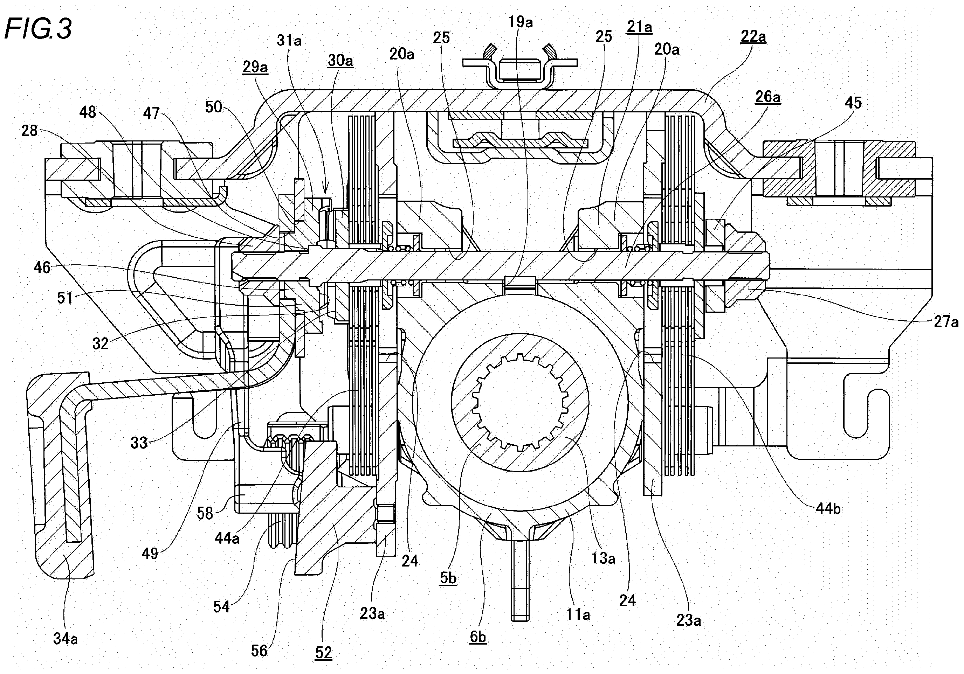

According to the structure of this embodiment, friction plate units 44a, 44b are respectively sandwiched between the driven cam 30a and the one support plate part 23a (left, in FIG. 3) and between the anchor part 27a and the other support plate part 23a (right, in FIG. 3). The friction plate units 44a, 44b are respectively configured by alternately overlapping one or more first friction plates each of which has a long hole conforming to the tilt adjustment long hole 24 (or the telescopic adjustment long hole 25) and one or more second friction plates each of which has a long hole (or circular hole) conforming to the telescopic adjustment long hole 25 (or the tilt adjustment long hole 24), and have a function of increasing a friction area to increase the holding force. Since the specific structures and operations of the friction plate units 44a, 44b are known, for example, in Patent Documents 2, 3, the detailed illustrations and descriptions thereof are omitted.

In this embodiment, the adjustment rod 26a is rotatably supported about a center axis thereof by both the support plate parts 23a, 23a, and the like. A thrust bearing 45 is provided between the anchor part 27a and an outer surface of the friction plate unit 44b, and a base end portion of the adjustment lever 34a is coupled and fixed to the tip portion of the adjustment rod 26a.

In this embodiment, the driven cam 30a out of a driving cam 29a and the driven cam 30a which configure the cam mechanism 31a is engaged with the friction plate unit 44a so as to be only displaced (with rotation thereof being inhibited) in a longitudinal direction of the tilt adjustment long hole 24. In contrast, the driving cam 29a is coupled and fixed to the tip portion of the adjustment rod 26a, together with the base end portion of the adjustment lever 34a. A small convex portion 46 which has a substantially rectangular shape and is provided at a center part of an outer surface of the driving cam 29a is fitted in a non-circular manner (a rectangular manner, in the shown embodiment) to a fitting hole 47 provided at the base end portion of the adjustment lever 34a so as not to be relatively rotatable. At this state, the driving cam 29a and the base end portion of the adjustment lever 34a are sandwiched and fixed between a step surface 48 provided at a tip side part of an outer peripheral surface of the adjustment rod 26a and facing the tip side and a nut 28 screwed to the tip portion of the adjustment rod 26a.

In this embodiment, a sub-arm 49 configured to rotate together with the adjustment lever 34a is coupled and fixed to the base end portion of the adjustment lever 34a. A large convex portion 51 which has a substantially rectangular shape and is provided around the small convex portion 46 of the outer surface of the driving cam 29a is fitted in a non-circular manner (a rectangular manner, in the shown embodiment) to a fitting hole 50 provided at a base end portion of the sub-arm 49 so as not to be relatively rotatable. At this state, the base end portion of the sub-arm 49 is sandwiched and fixed between the driving cam 29a and the base end portion of the adjustment lever 34a. The sub-arm 49 is formed of a metal or a synthetic resin such as a fiber reinforced plastic having elasticity, and is made to be thinner than the adjustment lever 34a so as to have the stiffness lower than the adjustment lever 34a. An inner surface of a tip portion 58 of the sub-arm 49 protrudes in a width direction.

A receiving side member 52 is fixed to a part (a lower end portion, in the shown embodiment) of the outer surface of the one support plate part 23a, which faces the tip portion 58 of the sub-arm 49, by a screw and the like. The receiving side member 52 is made of a metal or a synthetic resin such as a fiber reinforced plastic. The receiving side member 52 has a receiving plate part 53 which protrudes in the width direction at a front end portion of an outer surface thereof. A buffer member 54 made of a rubber or a synthetic resin, which is an elastic material, is supported and fixed to a rear surface of the receiving plate part 53 by a screw, an adhesive and the like. A rear end surface of the buffer member 54 is made to have a waveform shape, so that the stiffness of a rear end portion thereof is lowered to improve a buffering function of the rear end portion. Specifically, the rear end surface (contact surface) of the buffer member 54 which the tip portion 58 of the sub-arm 49 contacts is formed with a plurality of projections 54a extending in a direction (upper-lower direction) perpendicular to an axial direction of the cam mechanism 31a and arranged in the axial direction of the cam mechanism 31a.

Incidentally, a property of the buffer member 54 can be adjusted by changing the number or depth of the projections 54a. Also, a shape of the projection 54a is not limited to a triangular shape of this embodiment, may be a shape having a curved surface at a tip thereof or may have a trapezoidal section, and may be arbitrarily formed as long as it can be smoothly tilt-adjusted even though the sub-arm 49 is contacted thereto during unclamping.

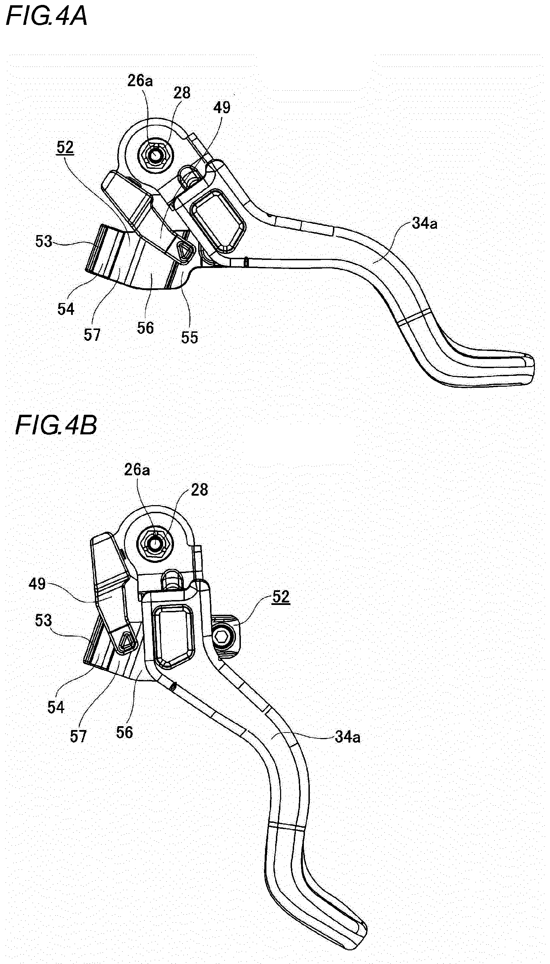

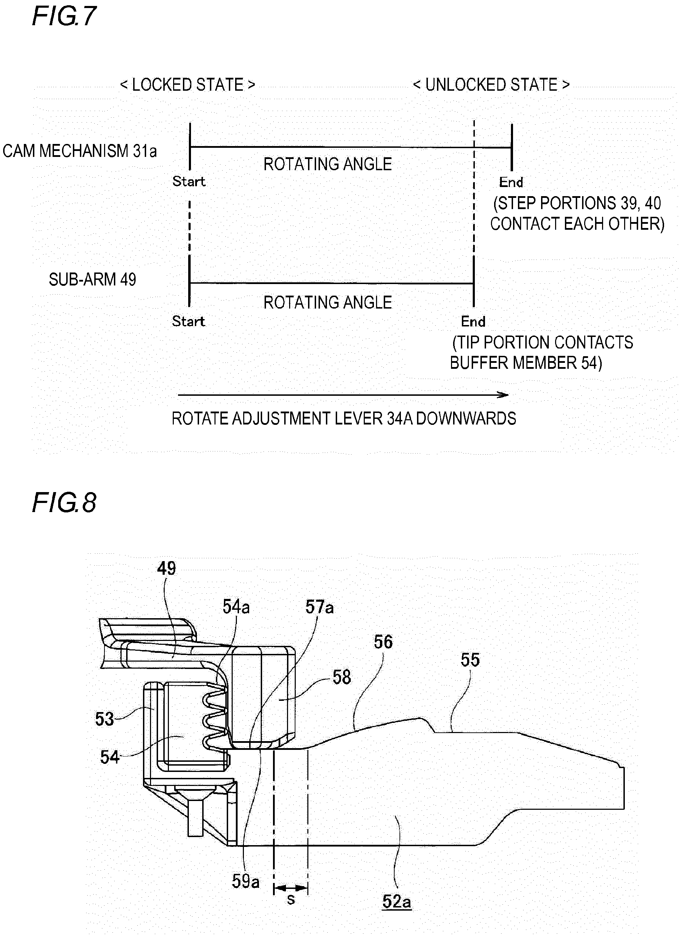

For example, as shown in FIGS. 4B to 6B, the tip portion 58 of the sub-arm 49 contacts the rear end surface of the buffer member 54 at the unlocked state where the adjustment lever 34a is rotated downwards. Specifically, as shown in FIG. 7, the structure of this embodiment is configured such that when the adjustment lever 34a is rotated downwards and is thus made to be at the unlocked state from the locked state where the adjustment lever 34a is rotated upwards, the tip portion 58 of the sub-arm 49 first contacts the rear end surface of the buffer member 54 (the receiving plate part 53 through the buffer member 54) before the step portions 39, 40 (refer to FIG. 12) of the driving and driven cam surfaces 32, 33 contact each other.

The receiving side member 52 is fixed to the one support plate part 23a such that the tip portion 58 of the sub-arm 49 contacts the buffer member 54 when the adjustment lever 34a is rotated by its own weight in a direction in which the axial dimension of the cam mechanism 31 is contracted. That is, even when an operator releases a hand from the adjustment lever 34a at the unlocked state and the adjustment lever 34a is thus rotated by its own weight, the tip portion 58 of the sub-arm 49 contacts the buffer member 54, so that the movement of the adjustment lever 34a at the unlocked state is regulated.

Regarding the outer surface of the receiving side member 52 facing the tip portion 58 of the sub-arm 49, a rear end side part thereof is provided with an engaging recess part 55, an intermediate part adjacent to a front side of the engaging recess part 55 in the front-rear direction is provided with an inclined surface part 56, and a front end side part adjacent to a front side of the inclined surface part 56 is provided with a flat part 57. The inclined surface part 56 is inclined in a direction in which a height in the width direction becomes lower as proceeding towards a front end side. The flat part 57 is provided at a position lower than a bottom surface of the engaging recess part 55 in the height in the width direction and smoothly continues to the inclined surface part 56.

At the locked state where the adjustment lever 34a is rotated upwards, the tip portion 58 of the sub-arm 49 is engaged with the engaging recess part 55, as shown in FIGS. 4A to 6A, for example. The engagement is made at a state where a pre-pressure is applied based on elastic deformation of the sub-arm 49 (elastic deformation occurring at at least a portion of a part except for the tip portion 58 of the sub-arm 49 in a direction in which the tip portion 58 is retreated outwards in the width direction). The tip portion 58 of the sub-arm 49 closely faces or contacts the flat part 57 without the pre-pressure at the unlocked state where the adjustment lever 34a is rotated downwards, as shown in FIGS. 4B to 6B, for example. The tip portion 58 of the sub-arm 49 contacts the inclined surface part 56 in the middle of rotating direction of the adjustment lever 34a at the state where the pre-pressure is applied based on the elastic deformation of the sub-arm 49.

In this embodiment, the buffer member 54, the engaging recess part 55, the inclined surface part 56 and the flat part 57 are respectively formed to be long in the adjusting direction (a tangential direction of a circle having a horizontal axis, which is a rotation center axis of the steering wheel 1 as a center) of the upper-lower position of the steering wheel 1 such that the tip portion 58 of the sub-arm 49 contacts, engages with or closely faces the rear end surface of the buffer member 54, the engaging recess part 55, the inclined surface part 56 and the flat part 57 in a similar manner to the above even when the upper-lower position of the sub-arm 49 is changed as the upper-lower position of the steering wheel 1 is changed.

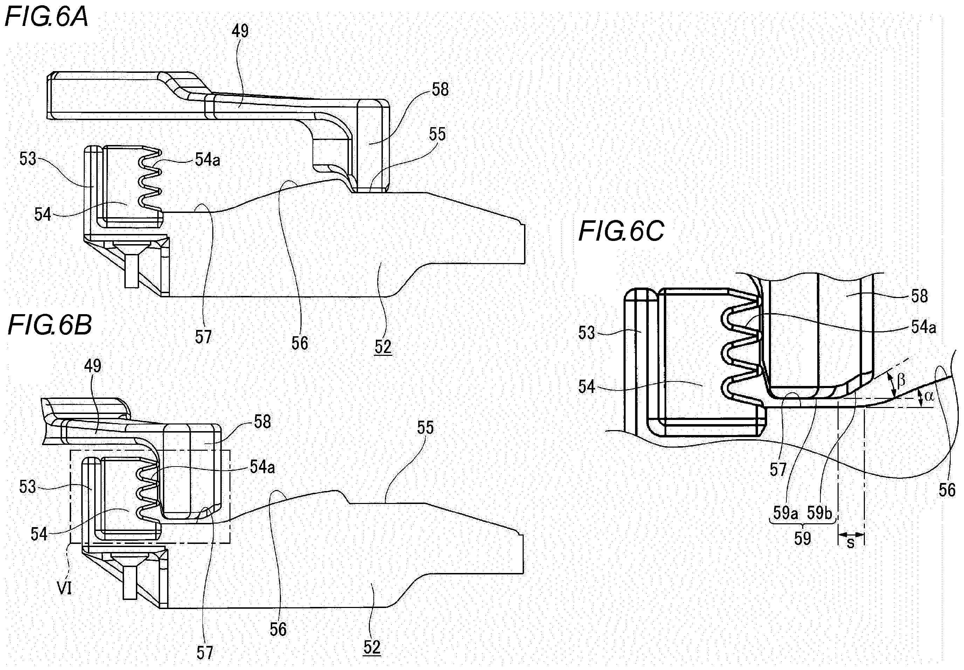

As shown in FIG. 6C, a facing surface 59 of the tip portion 58 of the sub-arm 49, which faces the outer surface of the receiving side member 52, is formed with a planar surface 59a parallel with the flat part 57 and an inclined surface 59b, which has an angle β greater than an inclined angle α of the inclined surface part 56 (β<α), at a portion (rear end-side) at one side of the rotating direction of the sub-arm 49. Since the angle of the inclined surface 59b is set as described above, the tip portion of the sub-arm 49 can be easily rotated upwards together with the adjustment lever 34a with contacting the inclined surface part 56 of the receiving side member 52.

The flat part 57 of the receiving side member 52 is formed to be long such that the planar surface 59a of the tip portion 58 of the sub-arm 49 is spaced from the inclined surface part 56 of the receiving side member 52 at a state where the tip portion 58 of the sub-arm 49 contacts the buffer member 54. That is, as shown in FIG. 6C, the flat part 57 is provided with a stroke s at the rear with respect to the planar surface 59a of the sub-arm 49 contacting the buffer member 54. Therefore, it is possible to prevent the sub-arm 49 from riding on the inclined surface part 56, which is caused due to a positional deviation of the sub-arm 49 during the tilt adjustment based on dimension errors of parts, and to smoothly perform the tilt adjustment.

According to the above-described position adjustable steering apparatus of this embodiment, when the adjustment lever 34a is rotated downwards from the locked state shown in FIGS. 4A to 6A so as to adjust a position of the steering wheel 1, the tip portion 58 of the sub-arm 49 rides on the rear end portion of the inclined surface part 56 from the engaging recess part 55 with increasing an elastic deformation amount of the sub-arm 49, is moved forwards up to the flat part 57 along the inclined surface part 56 with elastically restoring the sub-arm 49 and then contacts the rear end surface of the buffer member 54. Particularly, according to the structure of this embodiment, this contact is first made before the step portions 39, 40 (refer to FIG. 12) of the driving and driven cam surfaces 32, 33 contact each other. Therefore, it is possible to prevent the contact of the step portions 39, 40. Therefore, it is possible to suppress the generation of the harsh noise (metal contact noise), which would be caused due to the contact.

Also, when the adjustment lever 34a is rotated upwards from the unlocked state shown in FIGS. 4B to 6B so as to hold the steering wheel 1 at the adjusted position, the tip portion 58 of the sub-arm 49 rides on the front end portion of the inclined surface part 56 from the flat part 57 with elastically deforming the sub-arm 49 and is then moved rearwards along the inclined surface part 56 with increasing the elastic deformation amount of the sub-arm 49. When the tip portion is moved to the engaging recess part 55, the elastic deformation amount is decreased and the tip portion 58 of the sub-arm 49 is engaged with the engaging recess part 55. In the structure of this embodiment, the vibration (click feeling) generated due to this engagement can be transmitted to the operator of the adjustment lever 34a. Therefore, the operator can easily recognize that the locked state has been implemented. Also, it is possible to prevent the adjustment lever 34a from being unintentionally (against the intention of the operator) rotated downwards by the engaging force between the engaging recess part 55 (the step portion provided at the front edge of the engaging recess part) and the tip portion 58 of the sub-arm 49.

### [Second Embodiment]

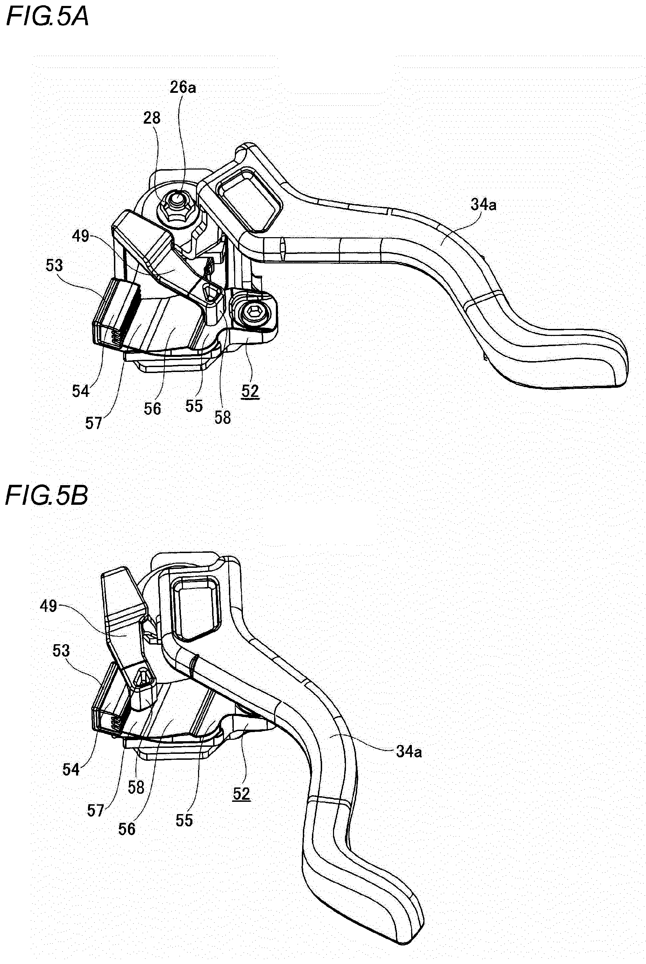

FIG. 8 illustrates a second embodiment of the present invention. In this embodiment, at the unlocked state where the adjustment lever 34a (for example, refer to FIGS. 4 and 5) is rotated downwards, the tip portion 58 of the sub-arm 49 contacts a flat part 57a of a receiving side member 52a in a state where the pre-pressure based on the elastic deformation of the sub-arm 49 is applied. Thereby, it is possible to securely prevent the adjustment lever 34a from rattling in the width direction at the unlocked state.

In this embodiment, since the flat part 57 is provided with the stroke s at the rear with respect to the planar surface 59a of the sub-arm 49 contacting the buffer member 54, it is possible to smoothly perform the tilt adjustment.

Since the other configurations and operations are the same as the first embodiment, the overlapping illustrations and descriptions are omitted.

### INDUSTRIAL APPLICABILITY

The present invention can be implemented not only as a tilt telescopic steering apparatus where both the front-rear position and upper-lower position of the steering wheel can be adjusted but also as a telescopic steering apparatus where only the front-rear position can be adjusted or a tilt steering apparatus where only the upper-lower position can be adjusted.

When the present invention is applied to the tilt telescopic steering apparatus, various structures including the conventional structure shown in FIGS. 10 and 11 can be adopted as a basic structure of the tilt telescopic steering apparatus.

The sub-arm may be produced integrally with the adjustment lever. Also, although the sub-arm is fixed to the base end portion of the adjustment lever, the sub-arm may have any structure which is fixed to the adjustment lever.

Although the buffer member contacts the tip portion of the sub-arm, the buffer member may contact any part of the sub-arm.

The buffer member may be fixed to the sub-arm, not the receiving side member.

### DESCRIPTION OF REFERENCE NUMERALS

1: steering wheel
2: steering gear unit
3: input shaft
4: tie rod
5, 5a, 5b: steering shaft
6, 6a, 6b: steering column
7: universal joint
8: intermediate shaft
9: universal joint
10: inner column
11, 11a: outer column
12: inner shaft
13, 13a: outer shaft
14: housing
15: electric motor
16: controller
17: support cylinder
18: center hole
19, 19a: slit
20, 20a: sandwiched plate part
21, 21a: displacement bracket
22, 22a: support bracket
23, 23a: support plate part
24: tilt adjustment long hole (vehicle body side through hole)
25: telescopic adjustment long hole (column side through hole)
26, 26a: adjustment rod
27, 27a: anchor part
28: nut
29, 29a: driving cam
30, 30a: driven cam
31, 31a: cam mechanism
32: driving cam surface
33: driven cam surface
34, 34a: adjustment lever
35: thrust bearing
36: convex portion
37: recess portion
38: convex portion
39: step portion
40: step portion
44a, 44b: friction plate unit
45: thrust bearing
46: small convex portion
47: fitting hole
48: step surface
49: sub-arm
50: fitting hole
51: large convex portion
52, 52a: receiving side member
53: receiving plate part
54: buffer member
55: engaging recess part
56: inclined surface part
57, 57a: flat part
58: tip portion

## Claims

1. A position adjustable steering apparatus comprising:
a cylindrical steering column (6b);
a displacement bracket (21a) which is fixedly provided to a part of the steering column (6b);
a steering shaft (13a) which is rotatably supported inside the steering column (6b) and includes a rear end portion which protrudes from a rear end opening of the steering column so as to support and fix a steering wheel (1);
a support bracket (22a) which is supported to a vehicle body side and includes a pair of support plate parts (23a) which interpose the displacement bracket (21a) therebetween from both sides in a width direction;
an adjustment rod (26a) which is inserted into a vehicle body side through hole (24) formed at the support plate parts (23a) and a column side through hole (25) formed at the displacement bracket (21a) in the width direction;
an anchor part (27a) which is provided at one end portion of the adjustment rod (26a);
an adjustment lever (34a) which is provided at the other end portion of the adjustment rod (26a); and
a cam mechanism (31a) which is provided between the adjustment lever (34a) and an outer surface of one support plate part of the pair of support plate parts (23a) and includes a driving cam (29a) configured to rotate together with the adjustment lever (26a) and a driven cam (30a) configured not to rotate irrespective of rotation of the adjustment lever (26a),
wherein the cam mechanism (31a) is configured by engaging cam surfaces (32, 33) which are provided on facing side surfaces of the driving cam (29a) and the driven cam (30a) and which have an uneven shape in a circumferential direction, and is configured to expand and contract an axial dimension of the cam mechanism (31a) based on rotation of the adjustment lever (26a), thereby expanding and contracting an interval between the driven cam (30a) and the anchor part (27a),
wherein at least one of the vehicle body side through holes (24) and the column side through hole (25) is configured as an adjustment long hole which is long in a direction in which a position of the steering wheel (1) is adjustable,
wherein the position adjustable steering apparatus further comprises:
a sub-arm (49) which is fixed to the adjustment lever (34a);
a receiving side member (52) which is fixed to the one support plate part (23a); and
a buffer member (54) which is made of an elastic material and fixed to either one of the sub-arm (49) or a part of the receiving side member (52), and
wherein when the adjustment lever (34a) is rotated in a direction in which the axial dimension of the cam mechanism (31a) is contracted, the other of the sub-arm (49) or the part of the receiving side member (52) contacts the buffer member (54),
wherein the cam mechanism (31a) is configured to regulate a relative rotation range of the driving cam (29a) and the driven cam (30a) in a direction in which the axial dimension thereof is contracted, by contact between stopper parts (39, 40) provided on the cam surfaces (32, 33), respectively, and
wherein, when the adjustment lever (34a) is rotated in the direction in which the axial dimension of the cam mechanism is contracted, either one of a tip portion (58) of the sub-arm (49) or the part of the receiving side member (52) first contacts the buffer member (54) before the stopper parts (39, 40) contact each other,
**characterized in that**
either one of the sub-arm (49) or the part of the receiving side member (52) contacts the buffer member (54) to prevent the stopper parts (39, 40) from contacting each other, wherein the driving cam (29a) is a metal driving cam and the driven cam (30a) is a metal driven cam.

2. The position adjustable steering apparatus according to claim 1,
wherein a contact surface of the buffer member (54) which the other of a tip portion (58) of the sub-arm (49) and the part of the receiving side member (52) contacts is formed with a plurality of projections (54a) extending in a direction perpendicular to an axial direction of the cam mechanism (31a) and arranged in the axial direction of the cam mechanism (31a).

3. The position adjustable steering apparatus according to claim 1 or claim 2,
wherein the receiving side member (52) is fixed to the one support plate part (23a) such that when the adjustment lever (34a) is rotated by its own weight in the direction in which the axial dimension of the cam mechanism (31a) is contracted, the other of a tip portion (58) of the sub-arm (49) and the part of the receiving side member (52) contacts the buffer member (54).

4. The position adjustable steering apparatus according to any one of claims 1 to 3, wherein an outer surface of the receiving side member (52) facing a tip portion (58) of the sub-arm (49) is provided with an engaging recess part (55) and an inclined surface part (56), the engaging recess part (55) being formed at a portion which faces the tip portion (58) of the sub-arm (49) and is an end portion at one side of a rotating direction of the sub-arm (49), in which the axial dimension of the cam mechanism (31a) is expanded, the inclined surface part (56) being formed at a portion adjacent to the engaging recess part (55) at the other side of the rotating direction of the sub-arm (49) and being inclined in a direction in which a height in the width direction becomes lower as proceeding towards the other side of the rotating direction, and
wherein the tip portion (58) of the sub-arm (49) contacts or engages the inclined surface part (56) and the engaging recess part (55) in a state where a pre-pressure based on elastic deformation of the sub-arm (49) is applied.

5. The position adjustable steering apparatus according to claim 4,
wherein a facing surface of the tip portion (58) of the sub-arm (49), which faces the outer surface of the receiving side member (52), is formed with an inclined surface (59b) which has an angle (β) greater than an inclined angle (α) of the inclined surface part (56) at a portion at the one side of the rotating direction of the sub-arm (49).

6. The position adjustable steering apparatus according to claim 4,
wherein the outer surface of the receiving side member (52) is provided with a flat part (57) at an opposite side to the engaging recess part (55) with respect to the inclined surface part (56),
wherein a facing surface of the tip portion (58) of the sub-arm (49) which faces the outer surface of the receiving side member (52) is formed with a planar surface parallel with the flat part (57), and
wherein the flat part (57) of the receiving side member (52) is formed to be long such that the planar surface of the tip portion (58) of the sub-arm (49) is spaced from the inclined surface part (56) of the receiving side member (52) at a state where the other of the tip portion (58) of the sub-arm (49) and the part of the receiving side member (49) contacts the buffer member (54).

7. The position adjustable steering apparatus according to claim 4,
wherein the tip portion (58) of the sub-arm (49) contacts or engages the outer surface of the receiving side member (52) including the inclined surface part (56) and the engaging recess part (55) always in a state where the pre-pressure based on the elastic deformation of the sub-arm (49) is applied.

## Patentansprüche

1. Positionseinstellbare Lenkvorrichtung, die Folgendes umfasst:
eine zylindrische Lenksäule (6b);
eine Versetzungshalterung (21a), die in fester Verbindung mit einem Teil der Lenksäule (6b) bereitgestellt ist;
eine Lenkwelle (13a), die rotierbar innerhalb der Lenksäule (6b) gelagert ist und einen hinteren Endabschnitt umfasst, der über eine hintere Endöffnung der Lenksäule vorsteht, um ein Lenkrad (1) zu lagern und festzulegen;
eine Lagerhalterung (22a), die an einer Fahrzeugkörperseite gelagert ist und ein Paar an Lagerplattenteilen (23a), die die Versetzungshalterung (21a) zwischen diesen von beiden Seiten in eine Breitenrichtung anordnen, umfasst;
einen Einstellstab (26a), der in ein Fahrzeugkörperseitendurchgangsloch (24), das an den Lagerplattenteilen (23a) ausgebildet ist, und ein Säulenseitendurchgangsloch (25), das an der Versetzungshalterung (21a) in der Breitenrichtung ausgebildet ist, eingeführt ist;
ein Verankerungsteil (27a), das an einem Endabschnitt des Einstellstabs (26a) bereitgestellt ist;
einen Einstellhebel (34a), der am anderen Endabschnitt des Einstellstabs (26a) bereitgestellt ist; und
einen Nockenmechanismus (31a), der zwischen dem Einstellhebel (34a) und einer äußeren Oberfläche von einem Lagerplattenteil des Paars an Lagerplattenteilen (23a) bereitgestellt ist und eine Antriebsnocke (29a) umfasst, die konfiguriert ist, um zusammen mit dem Einstellhebel (34a), und einer angetriebenen Nocke (30a) zu rotieren, die konfiguriert ist, um abgesehen von der Rotation des Einstellhebels (34a) nicht zu rotieren,
wobei der Nockenmechanismus (31a) konfiguriert ist, indem Nockenoberflächen (32, 33), die auf gegenüberliegenden Seitenflächen der Antriebsnocke (29a) und der angetriebenen Nocke (30a) bereitgestellt sind und die eine ungleichmäßige Form in einer Umfangsrichtung aufweisen, in Eingriff gebracht werden, und er konfiguriert ist, um eine axiale Abmessung des Nockenmechanismus (31a) basierend auf der Rotation des Einstellhebels (26a) auszudehnen und zusammenzuziehen, wodurch ein Abstand zwischen der angetriebenen Nocke (30a) und dem Verankerungsteil (27a) ausgedehnt oder zusammengezogen wird,
wobei zumindest eines aus den Fahrzeugkörperseitendurchgangslöchern (24) und dem Säulenseitendurchgangsloch (25) als Einstelllangloch konfiguriert ist, das in eine Richtung, in der eine Position des Lenkrads (1) einstellbar ist, lang ist,
wobei die positionseinstellbare Lenkvorrichtung weiters Folgendes umfasst:
einen Hilfsarm (49), der an dem Einstellhebel (34a) festgelegt ist;
ein Empfangsseitenelement (52), das an dem einen Lagerplattenteil (23a) festgelegt ist;
und
ein Pufferelement (54), das aus einem elastischen Material hergestellt und an einem aus dem Hilfsarm (49) oder einem Teil des Empfangsseitenelements (52) festgelegt ist, und
wobei, wenn der Einstellhebel (34a) in eine Richtung rotiert wird, in der die axiale Abmessung des Nockenmechanismus (31a) zusammengezogen wird, der andere der Hilfsarme (49) oder das Teil des Empfangsseitenelements (52) das Pufferelement (54) berührt,
wobei der Nockenmechanismus (31a) konfiguriert ist, um einen relativen Rotationsbereich der Antriebsnocke (29a) und der angetriebenen Nocke (30a) in eine Richtung, in der die axiale Abmessung davon zusammengezogen wird, durch Kontakt zwischen Abschlagteilen (39, 40), die auf den Nockenoberflächen (32 bzw. 33) bereitgestellt sind, einzustellen und
wobei, wenn der Einstellhebel (34a) in die Richtung rotiert wird, in der die axiale Abmessung des Nockenmechanismus (31a) zusammengezogen wird, einer aus einem Spitzenabschnitt (58) des Hilfsarms (49) oder dem Teil des Empfangsseitenelements (52) das Pufferelement (54) zuerst berührt, bevor die Abschlagteile (39, 40) einander berühren,
**dadurch gekennzeichnet, dass**
einer aus dem Hilfsarm (49) oder dem Teil des Empfangsseitenelements (52) das Pufferelement (54) berührt, um zu verhindern, dass die Abschlagteile (39, 40) einander berühren, wobei die Antriebsnocke (29a) eine Metallantriebsnocke ist und die angetriebene Nocke (20a) eine angetriebene Metallnocke ist.

2. Positionseinstellbare Lenkvorrichtung nach Anspruch 1,
wobei eine Kontaktfläche des Pufferelements (54), mit der der andere aus einem Spitzenabschnitt (58) des Hilfsarms (49) und dem Teil des Empfangsseitenelements (52) in Kontakt sind, mit einer Vielzahl an Vorsprüngen (54a), die sich in eine Richtung senkrecht zu einer Achsenrichtung des Nockenmechanismus (31a) erstrecken und die in Achsenrichtung des Nockenmechanismus (31a) angeordnet sind, ausgebildet ist.

3. Positionseinstellbare Lenkvorrichtung nach Anspruch 1 oder Anspruch 2,
wobei das Empfangsseitenelement (52) an dem einen Lagerplattenteil (23a) festgelegt ist, sodass, wenn der Einstellhebel (34a) durch sein Eigengewicht in die Richtung, in der die axiale Abmessung des Nockenmechanismus (31a) zusammengezogen wird, rotiert wird, der andere aus einem Spitzenabschnitt (58) des Hilfsarms (49) und dem Teil des Empfangsseitenelements (52) das Pufferelement (54) berührt.

4. Positionseinstellbare Lenkvorrichtung nach einem der Ansprüche 1 bis 3,
wobei eine äußere Oberfläche des Empfangsseitenelements (52), die einem Spitzenabschnitt (58) des Hilfsarms (49) gegenüberliegt, mit einem eingreifenden Vertiefungsteil (55) und einem geneigten Oberflächenteil (56) bereitgestellt ist, wobei das eingreifende Vertiefungsteil (55) an einem Abschnitt ausgebildet ist, der dem Spitzenabschnitt (58) des Hilfsarms (49) gegenüberliegt und ein Endabschnitt an einer Seite einer Rotationsrichtung des Hilfsarms (49) ist, in der die axiale Abmessung des Nockenmechanismus (31a) ausgedehnt wird, das geneigte Oberflächenteil (56) an einem Abschnitt ausgebildet ist, der benachbart zum eingreifenden Vertiefungsteil (55) auf der anderen Seite der Rotationsrichtung des Hilfsarms (49) ausgebildet ist und in eine Richtung geneigt ist, in der eine Höhe in die Breitenrichtung niedriger wird, je näher sie der anderen Seite der Rotationsrichtung kommt, und
wobei der Spitzenabschnitt (58) des Hilfsarms (49) mit dem geneigten Oberflächenteil (56) und dem eingreifenden Vertiefungsteil (55) in einem Zustand, in dem ein Vorspanndruck, basierend auf elastischer Deformation des Hilfsarms (49) ausgeübt wird, in Berührung gebracht wird oder mit diesem in Eingriff kommt.

5. Positionseinstellbare Lenkvorrichtung nach Anspruch 4,
wobei eine gegenüberliegende Oberfläche des Spitzenabschnitts (58) des Hilfsarms (49), die der Außenfläche des Empfangsseitenelements (52) gegenüberliegt, mit einer geneigten Oberfläche (59b) ausgebildet ist, die einen Winkel (β) aufweist, der größer ist als ein geneigter Winkel (α) des geneigten Oberflächenteils (56) in einem Abschnitt an der einen Seite der Rotationsrichtung des Hilfsarms (49).

6. Positionseinstellbare Lenkvorrichtung nach Anspruch 4,
wobei die Außenfläche des Empfangsseitenelements (52) mit einem flachen Teil (57) an einer dem eingreifenden Vertiefungsteil (55) in Bezug auf das geneigte Oberflächenteil (56) gegenüberliegenden Seite bereitgestellt ist,
wobei eine gegenüberliegende Seite des Spitzenabschnitts (58) des Hilfsarms (49), die der Außenfläche des Empfangsseitenelements (52) gegenüberliegt, mit einer planaren Oberfläche parallel zum flachen Teil (57) ausgebildet ist, und
wobei der flache Teil (57) des Empfangsseitenelements (52) so ausgebildet ist, dass er lang ist, sodass die planare Oberfläche des Spitzenabschnitts (58) des Hilfsarms (49) vom geneigten Oberflächenteil (56) des Empfangsseitenelements (52) in einem Zustand, in dem der andere des Spitzenabschnitts (58) des Hilfsarms (49) und der Teil des Empfangsseitenelements (49) mit dem Pufferelement (54) in Berührung sind, beabstandet ist.

7. Positionseinstellbare Lenkvorrichtung nach Anspruch 4,
wobei der Spitzenabschnitt (58) des Hilfsarms (49) mit der Außenfläche des Empfangsseitenelements (52), umfassend den geneigten Oberflächenteil (56) und den eingreifenden Vertiefungsteil (55), immer in einem Zustand, in dem der Vorspanndruck, basierend auf der elastischen Deformation des Hilfsarms (49) ausgeübt wird, in Kontakt gebracht wird oder mit diesem in Eingriff kommt.

## Revendications

1. Appareil de direction réglable en position comprenant :
une colonne de direction cylindrique (6b) ;
une console de déplacement (21a) qui est prévue, de manière fixe, sur une partie de la colonne de direction (6b) ;
un arbre de direction (13a) qui est supporté, en rotation à l'intérieur de la colonne de direction (6b) et comprend une partie d'extrémité arrière qui fait saillie d'une ouverture d'extrémité arrière de la colonne de direction afin de supporter et fixer un volant (1) ;
une console de support (22a) qui est supportée du côté de la carrosserie de véhicule et comprend une paire de parties de plaque de support (23a) qui intercalent la console de déplacement (21a) entre elles depuis les deux côtés dans le sens de la largeur ;
une tige de réglage (26a) qui est insérée dans un trou débouchant (24) du côté de la carrosserie de véhicule formé au niveau des parties de plaque de support (23a) et un trou débouchant (25) du côté de la colonne formé au niveau de la console de déplacement (21a) dans le sens de la largeur ;
une partie d'ancrage (27a) qui est prévue au niveau d'une partie d'extrémité de la tige de réglage (26a) ;
un levier de réglage (34a) qui est prévu au niveau de l'autre partie d'extrémité de la tige de réglage (26a) ; et
un mécanisme de came (31a) qui est prévu entre le levier de réglage (34a) et une surface externe d'une partie de plaque de support de la paire de parties de plaque de support (23a) et comprend une came d'entraînement (29a) configurée pour tourner conjointement avec le levier de réglage (26a) et une came entraînée (30a) configurée pour ne pas tourner indépendamment de la rotation du levier de réglage (26a),
dans lequel le mécanisme de came (31a) est configuré en mettant en prise des surfaces de came (32, 33) qui sont prévues sur des surfaces latérales en vis-à-vis de la came d'entraînement (29a) et de la came entraînée (30a) et qui ont une forme irrégulière dans une direction circonférentielle, et est configuré pour dilater et contracter une dimension axiale du mécanisme de came (31a) sur la base de la rotation du levier de réglage (26a), dilatant et contractant ainsi un intervalle entre la came entraînée (30a) et la partie d'ancrage (27a),
dans lequel au moins l'un des trous débouchants (24) du côté de la carrosserie de véhicule et le trou débouchant (25) du côté de la colonne est configuré comme un trou long de réglage qui est long dans une direction dans laquelle une position du volant (1) est réglable,
dans lequel l'appareil de direction réglable en position comprend en outre :
un bras auxiliaire (49) qui est fixé sur le levier de réglage (34a) ;
un élément latéral de réception (52) qui est fixé sur la une partie de plaque de support (23a) ; et
un élément tampon (54) qui est réalisé avec un matériau élastique et fixé sur l'un parmi le bras auxiliaire (49) ou une partie de l'élément latéral de réception (52), et
dans lequel lorsque le levier de réglage (34a) est entraîné en rotation dans une direction dans laquelle la dimension axiale du mécanisme de came (31a) est contractée, l'autre parmi le bras auxiliaire (49) ou la partie de l'élément latéral de réception (52) est en contact avec l'élément tampon (54),
dans lequel le mécanisme de came (31a) est configuré pour réguler une plage de rotation relative de la came d'entraînement (29a) et la came entraînée (30a) dans une direction dans laquelle sa dimension axiale est contractée par le contact entre les parties de butée (39, 40) prévues sur les surfaces de came (32, 33) respectivement, et
dans lequel, lorsque le levier de réglage (34a) est entraîné en rotation dans la direction dans laquelle la dimension axiale du mécanisme de came est contractée, l'une parmi une partie de pointe (58) du bras auxiliaire (49) ou la partie de l'élément latéral de réception (52) est tout d'abord en contact avec l'élément tampon (54) avant que les parties de butée (39, 40) ne soient en contact entre elles,
**caractérisé en ce que** :
l'un parmi le bras auxiliaire (49) ou la partie de l'élément latéral de réception (52) est en contact avec l'élément tampon (54) pour empêcher les parties de butée (39, 40) d'être en contact entre elles, dans lequel la came d'entraînement (29a) est une came d'entraînement métallique et la came entraînée (30a) est une came entraînée métallique.

2. Appareil de direction réglable en position selon la revendication 1,
dans lequel une surface de contact de l'élément tampon (54) dont l'autre parmi une partie de pointe (58) du bras auxiliaire (49) et la partie de l'élément latéral de réception (52) est en contact, est formée avec une pluralité de saillies (54a) s'étendant dans une direction perpendiculaire à une direction axiale du mécanisme de came (31a) et agencée dans la direction axiale du mécanisme de came (31a).

3. Appareil de direction réglable en position selon la revendication 1 ou la revendication 2,
dans lequel l'élément latéral de réception (52) est fixé sur la une partie de plaque de support (23a) de sorte que lorsque le levier de réglage (34a) tourne grâce à son propre poids dans la direction dans laquelle la dimension axiale du mécanisme de came (31a) est contractée, l'autre parmi une partie de pointe (58) du bras auxiliaire (49) et la partie de l'élément latéral de réception (52) est en contact avec l'élément tampon (54).

4. Appareil de direction réglable en position selon l'une quelconque des revendications 1 à 3,
dans lequel une surface externe de l'élément latéral de réception (52) faisant face à une partie de pointe (58) du bras auxiliaire (49) est prévue avec une partie d'évidement de mise en prise (55) et une partie de surface inclinée (56), la partie d'évidement de mise en prise (55) étant formée au niveau d'une partie qui fait face à la partie de pointe (58) du bras auxiliaire (49) et est une partie d'extrémité au niveau d'un côté d'une direction de rotation du bras auxiliaire (49), dans laquelle la dimension axiale du mécanisme de came (31a) est expansée, la partie de surface inclinée (56) étant formée au niveau d'une partie adjacente à la partie d'évidement de mise en prise (55) de l'autre côté de la direction de rotation du bras auxiliaire (49) et étant inclinée dans une direction dans laquelle une hauteur dans le sens de la largeur devient inférieure au fur et à mesure que l'on avance vers l'autre côté de la direction de rotation, et
dans lequel la partie de pointe (58) du bras auxiliaire (49) est en contact avec ou met en prise la partie de surface inclinée (56) et la partie d'évidement de mise en prise (55) dans un état dans lequel une pression préalable basée sur la déformation élastique du bras auxiliaire (49) est appliquée.

5. Appareil de direction réglable en position selon la revendication 4,
dans lequel une surface en vis-à-vis de la partie de pointe (58) du bras auxiliaire (49), qui fait face à la surface externe de l'élément latéral de réception (52), est formée avec une surface inclinée (59b) qui a un angle (β) supérieur à un angle incliné (α) de la partie de surface inclinée (56) au niveau d'une partie du un côté de la direction de rotation du bras auxiliaire (49).

6. Appareil de direction réglable en position selon la revendication 4,
dans lequel la surface externe de l'élément latéral de réception (52) est prévue avec une partie plate (57) d'un côté opposé à la partie d'évidement de mise en prise (55) par rapport à la partie de surface inclinée (56),
dans lequel une surface en vis-à-vis de la partie de pointe (58) du bras auxiliaire (49) qui fait face à la surface externe de l'élément latéral de réception (52) est formée avec une surface planaire parallèle à la partie plate (57), et
dans lequel la partie plate (57) de l'élément latéral de réception (52) est formée pour être longue de sorte que la surface planaire de la partie de pointe (58) du bras auxiliaire (49) est espacée de la partie de surface inclinée (56) de l'élément latéral de réception (52) dans un état dans lequel l'autre parmi la partie de pointe (58) du bras auxiliaire (49) et la partie de l'élément latéral de réception (49) est en contact avec l'élément tampon (54).

7. Appareil de direction réglable en position selon la revendication 4,
dans lequel la partie de pointe (58) du bras auxiliaire (49) est en contact avec ou met en prise la surface externe de l'élément latéral de réception (52) comprenant la partie de surface inclinée (56) et la partie d'évidement de mise en prise (55) toujours dans un état dans lequel la pression préalable basée sur la déformation élastique du bras auxiliaire (49) est appliquée.
